Europäisches Patentamt

European Patent Office

Office européen des brevets

(19)

(11) Numéro de publication: **0 149 418**

**A1**

(12)

# DEMANDE DE BREVET EUROPEEN

(21) Numéro de dépôt: **84810018.6**

(22) Date de dépôt: **11.01.84**

(51) Int. Cl.⁴: **H 02 K 11/00**
**H 02 K 23/66**

(43) Date de publication de la demande:
**24.07.85 Bulletin 85/30**

(84) Etats contractants désignés:
**AT BE CH DE FR GB IT LI LU NL SE**

(71) Demandeur: **PERLES ELEKTROWERKZEUGE UND MOTOREN AG**

**CH-2542 Pieterlen(CH)**

(72) Inventeur: **Kastivnik, Anton**
**Lyssstrasse 44a**
**CH-2560 Nidau(CH)**

(72) Inventeur: **Rothen, Marcel**
**Beaumontweg 4**
**CH-2502 Biel(CH)**

(74) Mandataire: **Seehof, Michel et al,**
**c/o AMMANN INGENIEURS-CONSEILS EN PROPRIETE INTELLECTUELLE SA BERNE Schwarztorstrasse 31**
**CH-3001 Berne(CH)**

(54) Procédé d'interconnexion pour un moteur électrique comportant des éléments auxiliaires et dispositif pour sa mise en oeuvre.

(57) Le dispositif comporte une plaque à circuit imprimé (18) avec une pluralité de conducteurs et des cosses (B1-B12) pour recevoir de manière amovible des éléments auxiliaires tels qu'interrupteur réseau (22), condensateur de déparasitage (23) et circuit électronique de réglage (24) enfichables dans ces cosses. Des barrettes rigides enfichables (17) relient l'enroulement de stator (3) du moteur (1) à la plaque à circuit imprimé (18). La plaque et les éléments auxiliaires sont tenus en place par des pattes (26) et des nervures (27) d'un couvercle de fermeture (11).

EP 0 149 418 A1

FIG.1

0149418

# PROCEDE D'INTERCONNEXION POUR UN MOTEUR ELECTRIQUE COMPORTANT DES ELEMENTS AUXILIAIRES ET DISPOSITIF POUR SA MISE EN OEUVRE

La présente invention concerne un procédé d'interconnexion pour un moteur électrique comportant des éléments auxiliaires. Elle concerne aussi un dispositif pour la mise en oeuvre du procédé.

Les moteurs dont il est question dans la présente invention peuvent être soumis à des conditions d'environnement très sévères, notamment en ce qui concerne les sollicitations par des vibrations mécaniques. C'est le cas par exemple lors d'une opération de meulage à la main dans laquelle une meule fixée en bout d'arbre du moteur est déplacée manuellement sur une surface à usiner ou encore lorsque le moteur est utilisé dans une opération de forage par percussion. Il est donc essentiel que le moteur et les différents éléments auxiliaires qu'il contient tels que charbons, interrupteur réseau, condensateur de déparasitage et éventuellement circuit électronique de réglage soit conçu pour résister efficacement à de telles contraintes. D'autre part, pour faciliter et accélérer le montage du moteur, il y a intérêt à supprimer autant que possible les fils souples de connexion et de centraliser celles-ci dans un élément précâblé.

En conséquence, le but de la présente invention est de réaliser un procédé et un dispositif de connexion des éléments du moteur permettant de supprimer la plus grande partie des connexions souples et offrant une grande sécurité de fonctionnement en présence de vibrations.

Pour atteindre ce but, le procédé et le dispositif sont réalisés comme décrit dans les revendications.

Par le fait que les éléments sont interconnectés de manière amovible par des connexions rigides précâblées, le montage est facilité et accéléré, il n'est plus nécessaire, lors du montage, de faire des mises de longueur de fils souples et de dénuder ceux-ci et les éléments auxiliaires qui sont montés de manière amovible peuvent être facilement et rapidement remplacés et interchangés.

L'invention va être décrite ci-après, à titre d'exemple et à l'aide du dessin dans lequel:

La figure 1 montre une coupe longitudinale du moteur,

la figure 2 montre une coupe selon la ligne II-II de la figure 1,

la figure 3 est une vue en perspective de la partie du moteur comportant le dispositif selon l'invention, sans bloc électronique de réglage, et

la figure 4 est une vue en perspective de la partie du moteur comportant le dispositif selon l'invention avec un bloc électronique de réglage.

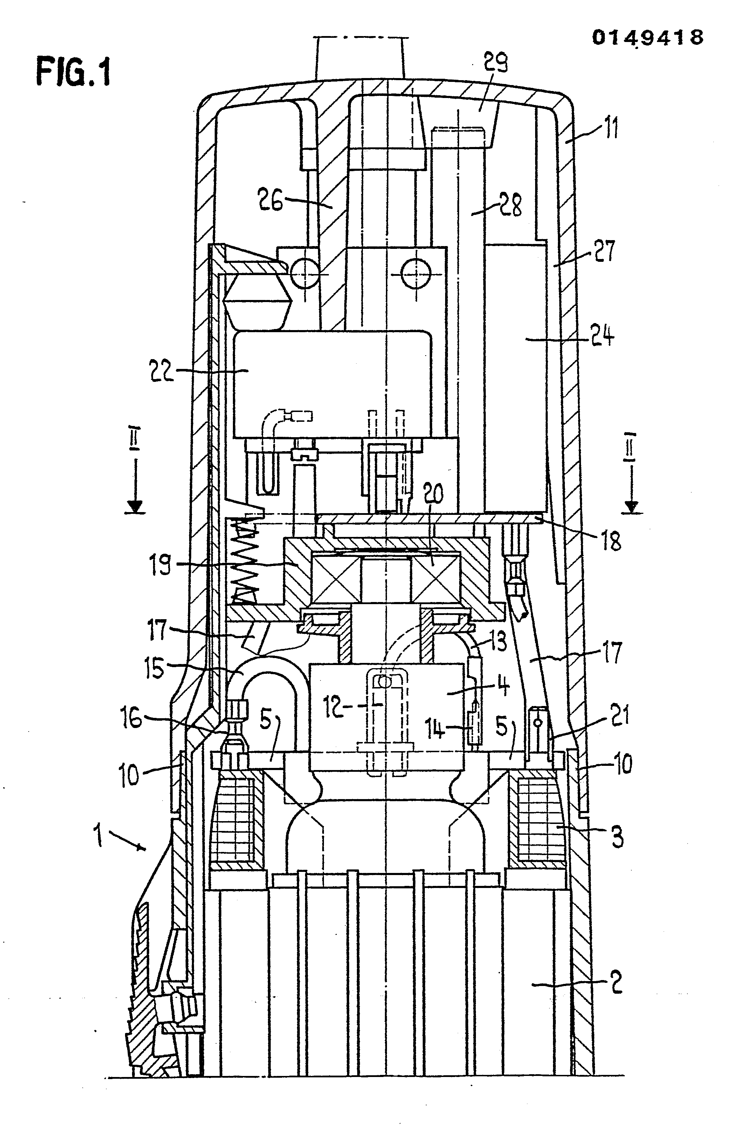

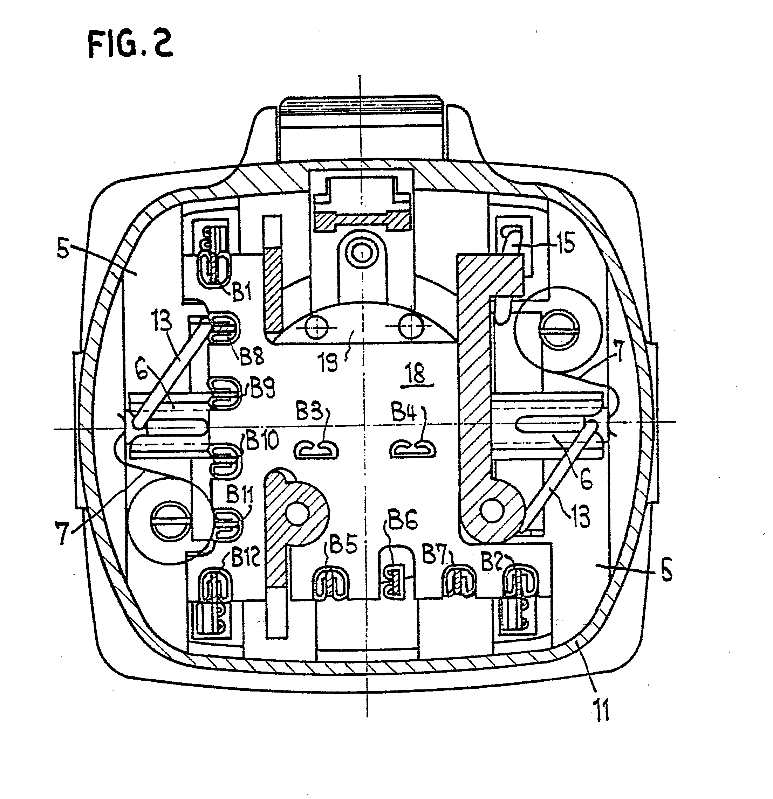

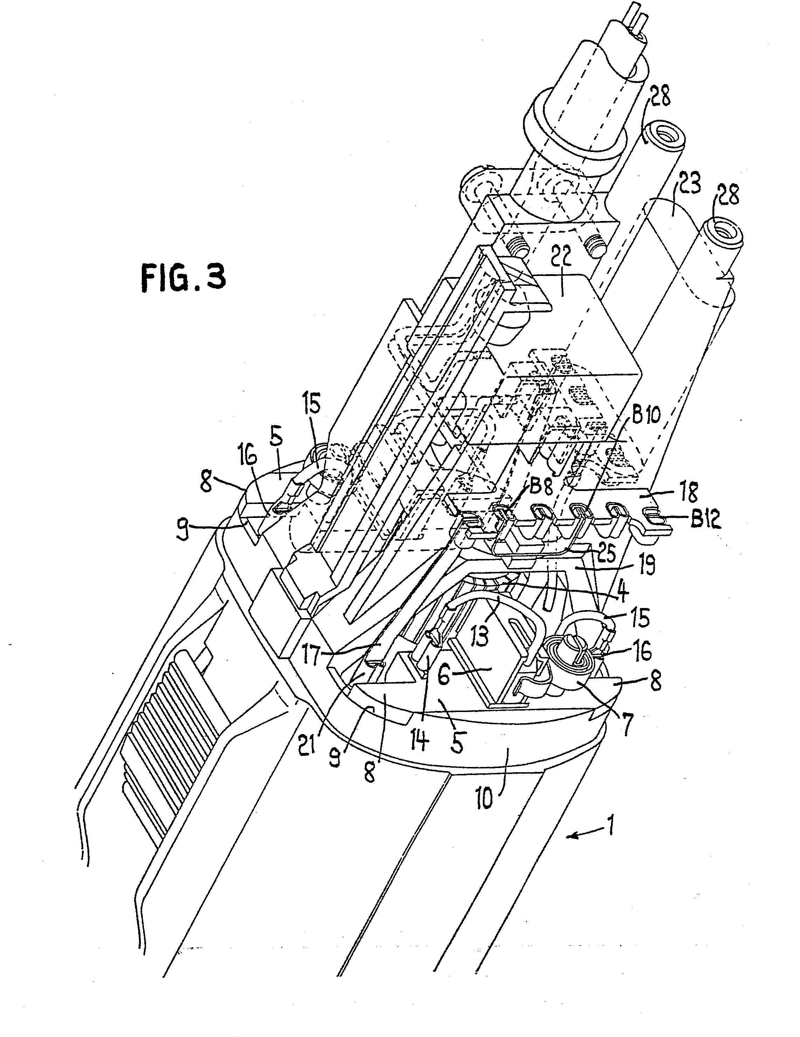

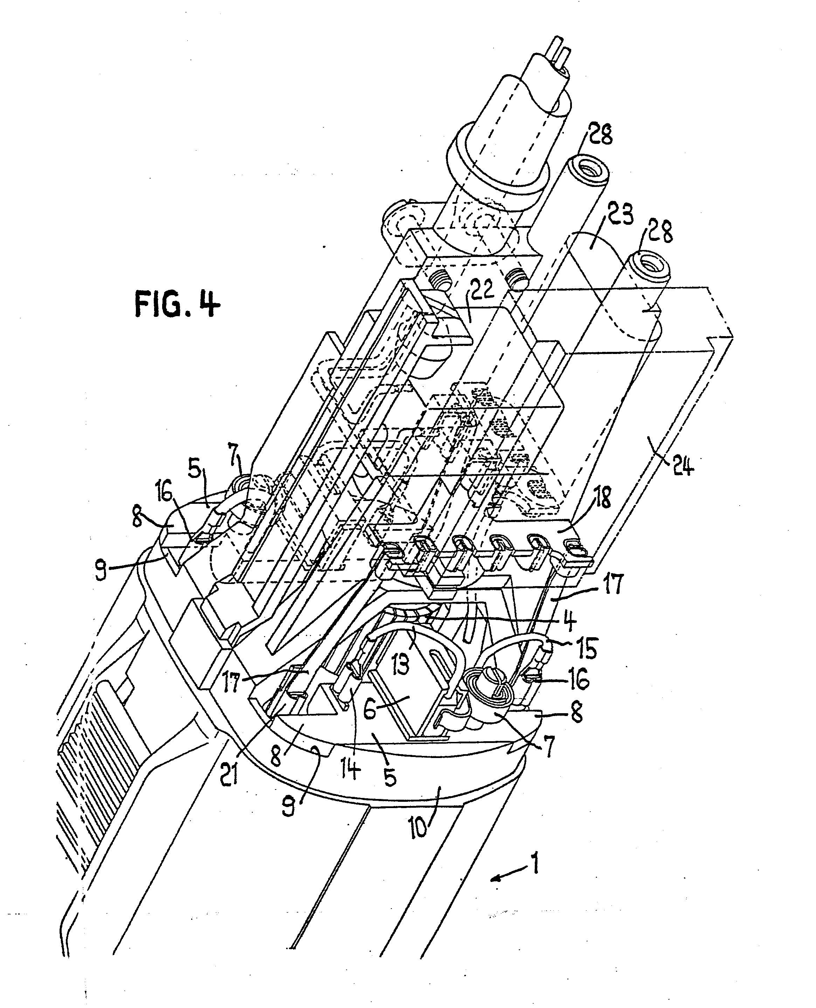

Selon figures 1 à 4, le moteur 1 comprend un stator 2 portant un enroulement de stator 3, un collecteur 4 et deux plaques porte charbon 5 bien visibles en figure 2. Mentionnons ici que l'invention ne concerne ni le schéma électrique du moteur ni celui d'une éventuelle électronique de réglage du moteur. Chaque plaque porte charbon 5 est en elle-même un module séparé comportant une douille porte charbon 6, une self induction (non représentée) et un ressort presse-charbon 7. La plaque porte charbon comporte des taquets 8 s'engageant lors de sa mise en place dans des dégagements 9 du siège 10 de la carcasse du moteur prévu pour recevoir un couvercle 11 de fermeture et de protection du dispositif selon l'invention. Les plaques porte charbon sont donc tenues fermement en place lorsque le couvercle 11 est monté. Le charbon 12 est relié par une connexion 13 à une cosse 14 de la self induction et par une connexion 15 à une cosse 16 de l'enroulement de stator 3. Les bornes de l'enroulement de stator sont raccordées par des barrettes rigides 17 à une plaque à circuit imprimé ou un élément similaire 18 posée sur un support 19 entourant le palier arrière 20 de l'arbre du moteur. Ces barrettes se terminent du côté du stator par une cosse 21 enfichable sur une borne de l'enroulement de stator et du côté de la plaque 18 par un couteau enfichable dans une des cosses de cette plaque. La plaque à circuit imprimé 18 est rigide et elle porte une série de cosses dans lesquelles sont enfichés les divers éléments auxiliaires du moteur. Les cosses B1 et B2 sont prévues pour les barrettes 17 de raccordement de l'enroulement de stator. Les cosses B3 et B4 reçoivent les bornes d'un interrupteur réseau 22, Les cosses B5, B6 et B7 reçoivent un condensateur de déparasitage 23, la cosse 6 étant une cosse de masse. Enfin, les cosses B8 à B12 sont prévues pour recevoir un circuit électronique de réglage 24 sous forme d'un module compacte permettant par exemple la stabilisation du nombre de tour, la limitation du courant de démarrage et une protection contre les surcharges. Ce circuit de réglage 24 est facultatif et, dans le cas où il n'est pas nécessaire, un pont 25 est inséré entre les cosses B8 et B10 (figure 3). Le circuit imprimé de la plaque 18 permet de relier entre eux de manière amovible les divers éléments du moteur tels qu'enroulement de stator, interrupteur réseau, condensateur de déparasitage et circuit électronique de réglage. La plaque 18 est posée sur un support 19 et elle est fermement appuyée contre ce support par une patte du couvercle 11 lorsque celui-ci est en place.

0149418

Une patte similaire 26 est indiquée en figure 1, cette patte maintenant en place l'interrupteur 22. Une nervure de guidage 27 vient appuyer sur une face latérale de circuit de réglage 24 pour maintenir celui-ci en appui contre un des montants 28 permettant la fixation du couvercle 11 sur la carcasse du moteur par des vis introduites dans des ouvertures 29 du couvercle. Ainsi, chacun des éléments de même que la plaque à circuit imprimé 18 est fermement maintenu en position par des pattes et des nervures lorsque le couvercle 11 est posé. Cette disposition, ainsi que le système de cosses de la plaque 18 permettent de donner au dispositif une grande résistance aux vibrations tout en garantissant un montage et démontage facile et rapide des divers éléments auxiliaires et en supprimant la plus grande partie des fils souples de connexion. Le tout forme un ensemble rigide et compacte pratiquement insensible aux vibrations.

0149418

REVENDICATIONS

1.  Procédé d'interconnexion pour un moteur électrique comportant des éléments auxiliaires tels qu'interrupteur réseau, condensateur de déparasitage, circuit électronique de réglage, caractérisé en ce que l'on enfiche lesdits éléments (22,23,24) sur une base rigide (18) comportant des connexions précâblées et en ce que lesdits éléments sont tenus en place lors de la pose d'un couvercle de fermeture (11).

2.  Dispositif pour la mise en oeuvre du procédé d'interconnexion pour un moteur électrique comportant des éléments auxiliaires selon la revendication 1, caractérisé en ce qu'il comprend une base rigide (18) supportant de manière amovible lesdits éléments (22,23,24), ladite base (18) comportant une pluralité de conducteurs électriques précâblés pour assurer les liaisons électriques entre le moteur (1) et lesdits éléments auxiliaires (22,23,24), ladite base (18) et les éléments auxiliaires (22,23,24) étant maintenus en place par un couvercle de fermeture (11).

3.  Dispositif selon la revendication 2, caractérisé en ce que la base rigide (18) est une plaque à circuit imprimé avec des cosses (B1-B12) prévues pour l'enfichage des éléments auxiliaires (22,23,24) sur ladite plaque.

4.  Dispositif selon la revendication 3, caractérisé en ce que les éléments auxiliaires (22,23,24) comportent des fiches s'introduisant dans lesdites cosses (B1-B12) lors de la mise en place desdits éléments sur la base rigide (18).

5.  Dispositif selon la revendication 3, caractérisé en ce qu'un pont (25) est enfiché entre deux cosses (B8, B10) de la plaque (18) en l'absence d'un circuit de réglage (24) du moteur (1).

6. Dispositif selon la revendication 2, caractérisé en ce que les extrémités d'un enroulement de stator (3) du moteur (1) sont reliées à des cosses (21) et que la liaison entre ces cosses (21) et la base rigide (18) est réalisée par des barrettes rigides (17) enfichables.

7. Dispositif selon la revendication 2, caractérisé en ce que la base rigide (18) est posée sur un support (19) disposé en bout d'arbre du moteur (1) et qu'elle est maintenue en place ainsi que les éléments auxiliaires (22,23,24) par des pattes (26) et des nervures (27) du couvercle de fermeture (11).

8. Dispositif selon la revendication 2, le moteur comportant des plaques porte charbon (5), caractérisé en ce que lesdites plaques (5) sont pourvues de taquets (8) s'introduisant dans des dégagements (9) d'un siège (10) de la carcasse du moteur (1) prévu pour recevoir le bord du couvercle de fermeture (11).

FIG.1

0149418

0149418

## FIG.2

FIG.3

0149418

0149418

FIG. 4

Office européen
des brevets

**0149418**
Numéro de la demande

**RAPPORT DE RECHERCHE EUROPEENNE**

EP  84 81 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl $^3$) |
|---|---|---|---|
| X | FR-A-1 489 281  (JOSEPH LUCAS)<br>* Page 2, colonne de gauche, ligne 8 - page 2, colonne de droite, ligne 45; figures 1-4 * | 1-4 | H 02 K  11/00<br>H 02 K  23/66 |
| Y | . | 6,7 | |
| | --- | | |
| Y | FR-A-2 219 559  (SIEMENS)<br>* Page 10, lignes 6-29; figures 3,4 * | 6,7 | |
| | --- | | |
| A | FR-A-2 033 838  (SIEMENS)<br>* Page 4, lignes 7-31; figures 2-4 * | 1,3,4 | |
| | --- | | |
| A | FR-A-2 019 175  (ROBERT BOSCH)<br>* Page 7, lignes 2-13; figures 4,5 * | 5 | DOMAINES TECHNIQUES RECHERCHES (Int. Cl. $^3$) |
| | --- | | H 02 K |
| A | US-A-3 250 927  (LUNG)<br>* Colonne 2, lignes 53-61; figure 2 * | 7 | |
| | --- | | |
| A | FR-A-2 085 568  (MARELLI)<br>* Page 1, ligne 36 - page 2, ligne 28; figures 1-3 * | 8 | |
| | ----- | | |

Le présent rapport de recherche a été établi pour toutes les revendications

| Lieu de la recherche | Date d'achèvement de la recherche | Examinateur |
|---|---|---|
| LA HAYE | 05-09-1984 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82